## Europäisches Patentamt
## European Patent Office
## Office européen des brevets

(11) Veröffentlichungsnummer : **0 195 188 B1**

(12) **EUROPÄISCHE PATENTSCHRIFT**

(45) Veröffentlichungstag der Patentschrift :
23.03.88

(51) Int. Cl.⁴ : **F 16 B 13/08**

(21) Anmeldenummer : **86100860.5**

(22) Anmeldetag : **23.01.86**

(54) **Spreizdübel für die Verankerung in konisch nach innen erweitert hergestellten Bohrlöchern.**

(30) Priorität : **21.03.85 DE 3510163**

(43) Veröffentlichungstag der Anmeldung :
**24.09.86 Patentblatt 86/39**

(45) Bekanntmachung des Hinweises auf die Patenterteilung : **23.03.88 Patentblatt 88/12**

(84) Benannte Vertragsstaaten :
**AT BE CH FR GB IT LI NL**

(56) Entgegenhaltungen :
**WO-A-84 /039 17**
**DE-A- 2 913 090**
**DE-A- 3 025 816**
**US-A- 3 855 896**

(73) Patentinhaber : **fischerwerke Artur Fischer GmbH & Co. KG**
**Weinhalde 14-18**
**D-7244 Tumlingen/Waldachtal 3 (DE)**

(72) Erfinder : **Fischer, Artur, Dr.h.c.**
**Weinhalde 34**
**D-7244 Waldachtal 3/Tumlingen (DE)**

Jouve, 18, rue St-Denis, 75001 Paris, France

## Beschreibung

Die Erfindung betrifft einen Spreizdübel für die Verankerung in konisch nach innen erweitert hergestellten Bohrlöchern, bestehend aus einem am Bohrlochgrund sich abstützenden, einen Spreizkonus aufweisenden Bolzen vorzugsweise mit Außengewinde, auf dessen Spreizkonus eine über einen Teil ihrer Länge mit Längsschlitzen versehene Spreizhülse auftreibbar ist, wobei die Spreizlamellen in Längsrichtung durch eine umlaufende Nut begrenzt sind.

Durch konisch erweiterte Bohrlöcher ist es möglich, nahezu spreizdruckfreie Verankerungen durchzuführen, die aufgrund der erhöhten Aufspreizung der Spreizhülse höhere Haltewerte erbringen, die selbst bei Rißbildung im Beton nur unwesentlich verringert werden. Die Länge der Spreizlamellen sind der Länge des Spreizkonuses angepaßt, so daß nach der Verankerung des Spreizdübels die Spreizlamellen den Spalt zwischen dem Spreizkonus und der Hinterschneidung im Bohrloch vollständig ausfüllen.

Bei durchmessergrößeren Ausführungen solcher Spreizdübel weisen die Spreizlamellen eine Schalendicke auf, die beim Aufgleiten der Spreizlamellen auf den Spreizkonus eine Durchbiegung im Bereich des Übergangs vom zylindrischen Teil des Bolzens zum Spreizkonus nicht mehr zuläßt. Dadurch wird auf die Übergangsstelle zwischen zylindrischem und konischem Bohrloch ein hoher Preßdruck ausgeübt, der einen hohen Eintreibwiderstand verursacht und zu einem Ausbruch dieser Übergangsstelle führen kann. Durch einen solchen Ausbruch wird die Abstützfläche für die Spreizlamellen verringert, was eine Verschlechterung des Schlupfverhaltens des Spreizdübels bewirkt.

Der Erfindung liegt die Aufgabe zugrunde, den eingangs erwähnten Spreizdübel derart zu verbessern, daß einerseits der Eintreibwiderstand verringert wird und andererseits eine vollflächige Anlage der Spreizlamellen in der Hinterschneidung des Bohrloches erreicht wird.

Erfindungsgemäß wird dies dadurch erreicht, daß die Spreizlamellen durch wenigstens eine quer zur Längsrichtung der Spreizlamelle verlaufende Kerbe in etwa gleich lange Abschnitte unterteilt sind.

Durch die erfindungsgemäße Lösung werden die Spreizlamellen in gelenkig miteinander verbundene Abschnitte unterteilt, so daß die Spreizlamellen beim Auftreiben auf den Spreizkonus an der durch die Kerbe gebildeten Querschnittsschwächung zum Bolzen hin abknicken. Damit gleiten die Spreizlamellen auf den Spreizkonus auf, ohne die Bohrlochwandung im Bereich der Übergangsstelle zwischen zylindrischem und hinterschnittenem Teil der Bohrung zu beschädigen. Dadurch werden die Spreizlamellen in der Hinterschneidung des Bohrloches vollflächig bis zur Übergangsstelle abgestützt. Ein Ausweichen der Spreizlamellen bei einer auf den Bolzen und Spreizkonus wirkenden Zugkraft tritt nicht mehr auf, so daß ein Schlupf durch axiale Bewegung des Bolzens weitgehend ausgeschlossen ist.

In einer weiteren Ausgestaltung der Erfindung kann die Kerbe an der Außenfläche der Spreizlamelle angeordnet sein.

Schließlich kann in weiterer Ergänzung der Erfindung der durchmesserkleinere Abschnitt des Spreizkonuses eine umlaufende Hohlkehle aufweisen, deren Breite geringer ist als die Länge eines Spreizlamellenabschnittes. Durch diese Hohlkehle wird die Umlenkung der Spreizlamellen über die Übergangsstelle hinaus in den Bereich der Hinterschneidung verlagert. Damit ergibt sich eine weitere Entlastung dieser Übergangsstelle.

In der Zeichnung sind Ausführungsbeispiele der Erfindung dargestellt.

Es zeigen :

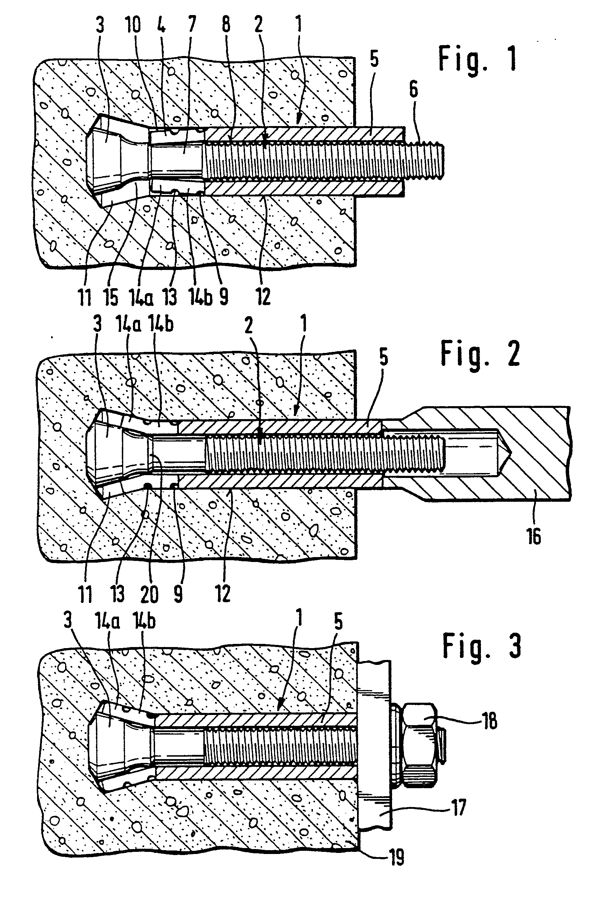

Figur 1 den im Bohrloch eingesetzten Spreizdübel

Figur 2 den Spreizdübel beim Eintreibvorgang mit einem Einschlagwerkzeug

Figur 3 den verankerten Spreizdübel.

Der Spreizdübel 1 besteht aus dem Stehbolzen 2 mit kegelförmigem Spreizkonus 3 und der über einen Teil ihrer Länge mit Längsschlitzen 4 versehenen Spreizhülse 5. Der Stehbolzen 2 weist ein über einen Teil seiner Länge verlaufendes Außengewinde 6 auf, das in einem Abstand vom Spreizkonus 3 endet. Dieser zwischen dem Gewinde 6 und dem Spreizkonus 3 liegende Schaft 7 des Stehbolzens besitzt einen Durchmesser, der etwas geringer ist als der Gewindeaußendurchmesser. Über den Stehbolzen 2 ist die Spreizhülse 5 gestülpt, deren Innenbohrung 8 dem Gewindeaußendurchmesser des Stehbolzens 2 entspricht. Die durch die umlaufende Nut 9 begrenzten Spreizlamellen der Spreizhülse 5 sind auf den im Durchmesser reduzierten Schaft 7 des Stehbolzens bis zur Anlage der inneren Stirnkante eingedrückt. Damit ergibt sich eine Anlaufschräge 10, die das Einführen des Befestigungselementes in das mit einer Hinterschneidung 11 versehene Bohrloch 12 erleichtert. Die Außenfläche der Spreizlamellen ist mit einer quer zur Längsrichtung der Spreizlamellen verlaufenden Kerbe 13 versehen, die die Spreizlamellen in etwa gleich lange Abschnitte 14a, 14b unterteilt. Ferner weist der durchmesserkleinere Abschnitt des Spreizkonuses 3 eine umlaufende Hohlkehle 15 auf, deren Breite geringer ist als die Länge eines Spreizlamellenabschnittes.

Zur Verankerung des Spreizdübels 1 wird die Spreizhülse 5 mittels einer Einschlaghülse 16 auf den Spreizkonus 3 des am Bohrlochgrund sich abstützenden Stehbolzens 2 aufgetrieben. Dabei dringen die Spreizlamellen der Spreizhülse 5 in den zwischen Spreizkonus 3 und Hinterschneidung 11 des Bohrloches 12 gebildeten Spalt ein. Durch die Unterteilung der Spreizlamellen in zwei über die Querschnittsschwächung im Bereich der Kerbe 13 gelenkig miteinander verbundenen Abschnitte 14a, 14b kann die Spreizlamelle beim Eintreibvorgang einknicken, so daß eine erheblich geringere Belastung der Übergangsstelle 20 zwischen zylindrischem und konischem Teil des Bohrloches eintritt. Diese Übergangsstelle 20 bleibt somit im wesentlichen unbeschädigt, so daß die Spreizlamellen nach der vollständigen Verankerung vollflächig bis zur Übergangsstelle 20 in der Hinterschneidung 11 abgestützt sind. Eine weitere Druckentlastung für diese Übergangsstelle ergibt sich aus der am Spreizkonus 3 angeordneten Hohlkehle 15, die die Umlenkung der Spreizlamellen über die Übergangsstelle 20 hinaus in den Bereich der Hinterschneidung 11 verlagert. Nach der Verankerung des Spreizdübels 1 wird auf den die Mauerwerksoberfläche überragenden Stehbolzen 2 der zu befestigende Gegenstand 17 aufgesteckt und mittels einer Mutter 18 am Mauerwerk 19 verspannt.

### Patentansprüche

1. Spreizdübel für die Verankerung in konisch nach innen erweitert hergestellten Bohrlöchern, bestehend aus einem am Bohrlochgrund sich abstützenden, einen Spreizkonus aufweisenden Bolzen vorzugsweise mit Außengewinde, auf dessen Spreizkonus eine über einen Teil ihrer Länge mit Längsschlitzen versehene Spreizhülse auftreibbar ist, wobei die Spreizlamellen in Längsrichtung durch eine umlaufende Nut begrenzt sind, dadurch gekennzeichnet, daß die Spreizlamellen durch wenigstens eine quer zur Längsrichtung der Spreizlamelle verlaufende Kerbe in etwa gleich lange Abschnitte unterteilt sind.

2. Spreizdübel nach Anspruch 1, dadurch gekennzeichnet, daß die Kerbe an der Außenfläche der Spreizlamelle angeordnet ist.

3. Spreizdübel nach Anspruch 1, dadurch gekennzeichnet, daß der durchmesserkleinere Abschnitt des Spreizkonusses eine umlaufende Hohlkehle aufweist, deren Breite geringer ist als die Länge eines Spreizlamellenabschnittes.

### Claims

1. Expansible plug for anchoring in drilled holes that widen conically inwards, comprising a bolt, preferably with an external thread, which has an expander cone and is supported on the base of the drilled hole, it being possible for an expansible sleeve that is provided with longitudinal slots over part of its length to be driven onto the expander cone of the bolt, the expansible blades being limited in the longitudinal direction by a circumferential groove, characterised in that the expansible blades are divided into sections of approximately equal length by at least one notch extending transversely to the longitudinal direction of the expansible blade.

2. Expansible plug according to claim 1, characterised in that the notch is arranged on the outer surface of the expansible blade.

3. Expansible plug according to claim 1, characterised in that that section of the expander cone that is of smaller diameter has a circumferential chamfer, the width of which is smaller than the length of a section of the expansible blade.

### Revendications

1. Cheville expansible pour ancrage dans un trou évasé en cône vers l'intérieur, composée d'un goujon (2) avantageusement fileté (6) destiné à s'appliquer contre le fond du trou (12) et comportant un cône de dilatation (3) sur lequel peut être repoussée une douille expansible (5) présentant sur une partie de sa longueur des fentes longitudinales (4), les lamelles expansibles étant délimitées dans le sens longitudinal par une gorge périphérique (9), caractérisée en ce que les lamelles expansibles sont subdivisées en sections (14a, 14b) ayant sensiblement la même longueur, par au moins une rainure (13) perpendiculaire à leur sens longitudinal.

2. Cheville expansible selon la revendication 1, caractérisée en ce que la rainure (13) est formée sur la surface extérieure des lamelles expansibles.

3. Cheville expansible selon la revendication 1, caractérisée en ce que la partie du cône de dilatation (3) qui a le diamètre le plus faible présente un congé périphérique (15), dont la largeur est inférieure à la longueur d'une section de lamelle expansible.

Fig. 1

Fig. 2

Fig. 3